# EUROPEAN PATENT SPECIFICATION

(11) **EP 3 069 982 B1**
(45) Date of publication and mention of the grant of the patent: **20.12.2017**
(21) Application number: 15160083.0
(22) Date of filing: 20.03.2015
(51) Int. Cl.: B62K 21/02, B62K 19/38, B29C 47/00, B29C 51/02, B29C 53/08, B29C 57/00, B29C 59/00, B22F 3/20

(54) **METHOD FOR MANUFACTURING A BICYCLE FRONT FORK HAVING A WHEEL CLAMPING BASE**
VERFAHREN ZUR HERSTELLUNG EINER FAHRRADVORDERRADGABEL MIT RADSPANNBASIS
PROCÉDÉ DE FABRICATION D'UNE FOURCHE AVANT DE BICYCLETTE AVEC UNE BASE DE SERRAGE DE ROUE

(43) Date of publication of application: 21.09.2016
(73) Proprietor: Alex Global Technology, Inc., Tainan City (TW)
(72) Inventor: Chen, Wei-Chin, Tainan City (TW)
(74) Representative: Jeannet, Olivier

(56) References cited:
- EP-A2- 2 230 165
- TW-A- 201 425 120
- US-A- 6 049 982

## Description

### BACKGROUND OF THE INVENTION

### 1. Field of the invention

The present invention relates to a method for manufacturing a bicycle front fork having a wheel clamping base, especially for making an integrally formed bicycle front fork having a clamping base at the front ends of fork tubes.

### 2. Description of Related Art

Generally, when a bicycle is passing through the rugged road, not only its bicycle front fork but also its clamping base for receiving a wheel axle must sustain much vibration and impact. Therefore, the clamping base of the bicycle front fork usually has a solid structure for enhancing its resistance to vibration and impact. However, bicycle front forks are usually made to have a hollow structure in order to have a decreased weight. In such a case, it is difficult to integrate the clamping base having a solid structure into the bicycle front forks having a hollow structure. For instance, a European Patent No. EP2230165, issued on 22nd Sep. 2010, has disclosed a unitary crown fork assembly and method of fabrication, which shows that clamping bases are manufactured at first and then the clamping bases are bonded or welded to the front ends of two fork tubes of a bicycle front fork (page 6, paragraph [0061]). However, in subjected to vibration and impact, the bonding or welding area is prone to broken due to its poor structural strength. Furthermore, the abovementioned method also has disadvantages, i.e. complicated, time-consuming and costly manufacturing procedure, and poor appearance due to having a bonding or welding sign.

### SUMMARY OF THE INVENTION

In view of the above-mentioned problems, the object of the present invention is to provide a method for manufacturing a bicycle front fork having a wheel clamping base, especially for making an integrally formed bicycle front fork having a clamping base at the front ends of fork tubes. Moreover, the front side of the fork tubes of the bicycle front fork can be provided with bumps for locking a brake.

To achieve the above object, the present invention was developed based on a Taiwan Patent No. 201425120, which issued on 1st July. 2014 and disclosed a manufacturing method for integrally formed bicycle fork made of aluminum alloy.

### BRIEF DESCRIPTION OF THE DRAWINGS

FIG. 1 is a flow chart of a first embodiment of the present invention;
FIG. 2 is a schematic drawing showing the first embodiment of the present invention;
FIG. 3 is a stereogram showing a finished product of the first embodiment of the present invention;
FIG. 4 is a flow chart of a second embodiment of the present invention;
FIG. 5 is a schematic drawing showing the second embodiment of the present invention;
FIG. 6 is a stereogram showing a finished product of the second embodiment of the present invention;
FIG. 7 is a flow chart of a third embodiment of the present invention;
FIG. 8 is a schematic drawing showing the third embodiment of the present invention;
FIG. 9 is a flow chart of a fourth embodiment of the present invention;
FIG. 10 is a schematic drawing showing the fourth embodiment of the present invention.

### DETAILED DESCRIPTION OF THE PREFERRED EMBODIMENT

Hereinafter, an exemplary embodiment of the present invention will be described in detail with reference to the accompanying drawings.

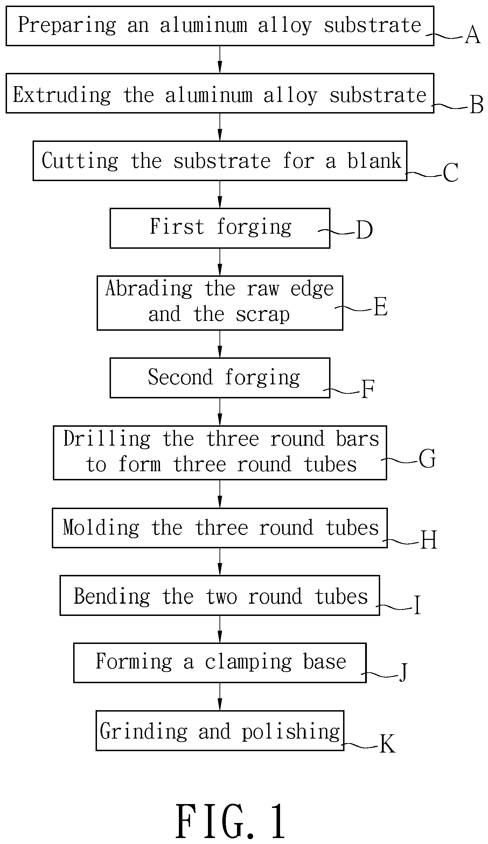

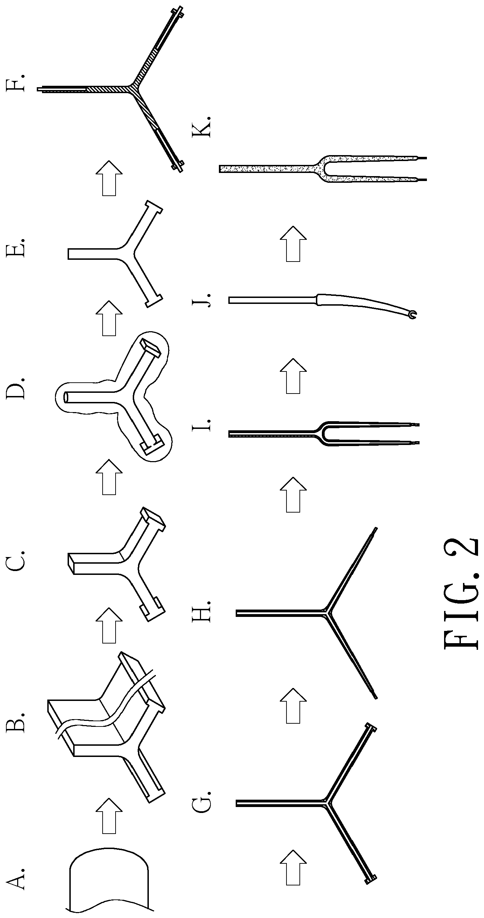

Referring to Fig. 1 and Fig. 2, a flow chart and a schematic drawing showing the first embodiment of the present invention are revealed. A method for manufacturing an integrally formed bicycle front fork having a wheel clamping base comprises the steps of:
A. preparing an aluminum alloy substrate having an appropriate length;
B. extruding the aluminum alloy substrate to have three rectangular bars integrally connected in a radial orientation, wherein two of the three rectangular bars has a first side and a second side on the front end thereof, and the first side or both of the first side and the second side connect to assembling segments; preferably both of the first side and the second side of each of the two rectangular bars are provided with a assembling segment;
C. cutting the substrate for a blank having an appropriate length;
D. placing the blank into a first mold for forging the three rectangular bars into three round bars and stamping a raw edge and a scrap of the blank;
E. abrading the raw edge and the scrap of the blank;
F. placing the blank into a second mold for extruding and punching front ends of the three round bars of the blank to have guide holes;
G. drilling the three round bars along the guide holes to form three round tubes communicated with one another;
H. flattening and shrinking openings of two of the three round tubes, and molding the assembling segments to connectedly extend from the front ends of the two round tubes in parallel;
I. downwardly bending the two round tubes having the assembling segments to space apart from each other in parallel for two fork tubes of a bicycle front fork and allowing the other round tube to form a vertical tube of the front fork;
J. punching the assembling segments at the front ends of the two fork tubes into locking connection portions for a clamping base of the bicycle front fork; and
K. grinding and polishing a surface of the bicycle front fork to form a finished product having a polishing and flawless appearance.

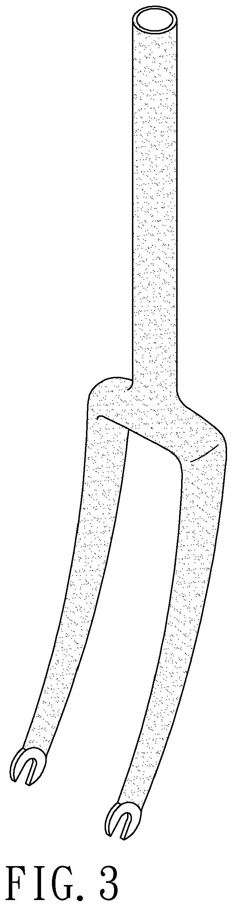

Accordingly, a bicycle front fork having a clamping base for receiving a wheel axle is integrally formed without bonding or welding as shown in Fig. 3. Because the bicycle front fork having a clamping base of the present invention has a solid structure, it can withstand a relatively large and frequent vibration and impact. In such a case, the present invention prevent the disadvantages, i.e. complicated, time-consuming and costly manufacturing procedure, and poor appearance due to having a bonding or welding sign, of the traditional method.

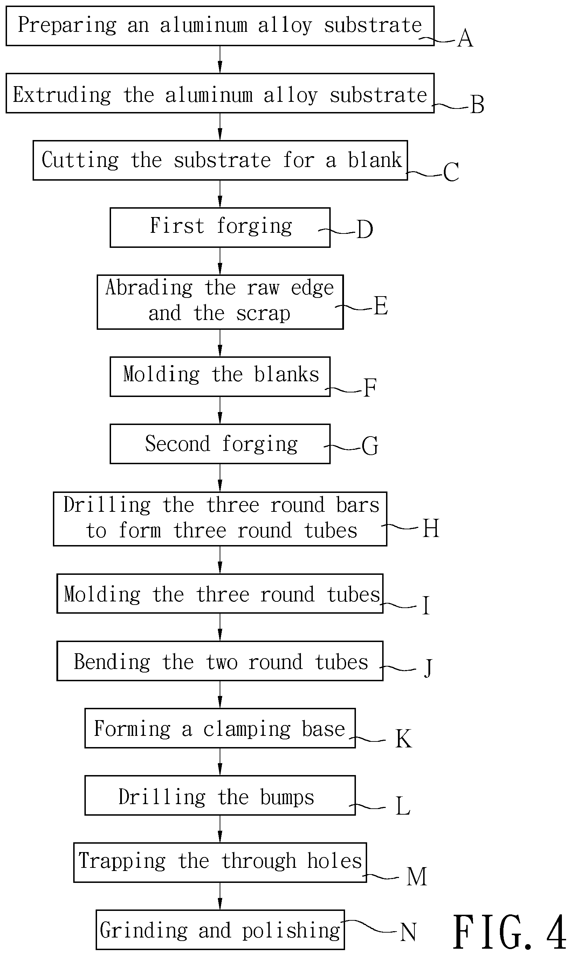

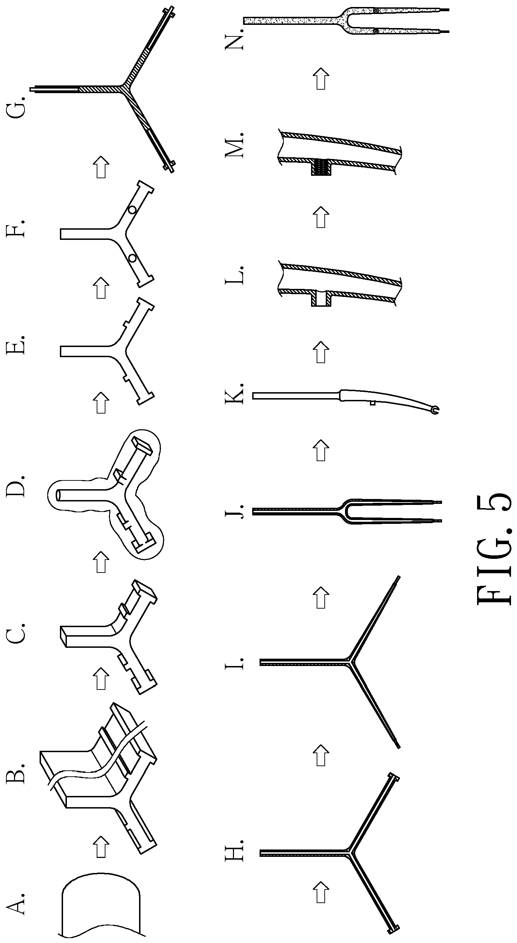

Referring to Fig. 4 and Fig. 5, a flow chart and a schematic drawing showing the second embodiment of the present invention are revealed. A method for manufacturing a bicycle front fork having a bump on a lateral of each of the two round bars comprises the steps of:
A. preparing an aluminum alloy substrate having an appropriate length;
B. extruding the aluminum alloy substrate to have three rectangular bars integrally connected in a radial orientation, wherein two of the three rectangular bars has a first side and a second side on the front end thereof, and the first side or both of the first side and the second side connect to assembling segments; preferably both of the first side and the second side of each of the two rectangular bars are provided with a assembling segment, and a lateral of the each of the two rectangular bars are provided with a bump;
C. cutting the substrate for a blank having an appropriate length;
D. placing the blank into a first mold for forging the three rectangular bars into three round bars and stamping a raw edge and a scrap of the blank;
E. abrading the raw edge and the scrap of the blank;
F. flattening and molding the bump on each of the two round bars of the blank to bend the same at a 90-degree angle, allowing the bump from the lateral to a front of each of the two round bars;
G. placing the blank into a second mold for extruding and punching front ends of the three round bars of the blank to have guide holes;
H. drilling the three round bars along the guide holes to form three round tubes communicated with one another;
I. flattening and shrinking openings of two of the three round tubes, and molding the assembling segments to connectedly extend from the front ends of the two round tubes in parallel;
J. downwardly bending the two round tubes having the assembling segments to space apart from each other in parallel for two fork tubes of a bicycle front fork and allowing the other round tube to form a vertical tube of the bicycle front fork;
K. punching the assembling segments at the front ends of the two fork tubes into locking connection portions for a clamping base of the bicycle front fork;
L. drilling the bumps on the two fork tubes to have through holes;
M. tapping the through holes on the bumps of the two fork tubes to have a thread section on a wall of each of the through holes; and finally
N. grinding and polishing a surface of the bicycle front fork to form a finished product having a polishing and flawless appearance.

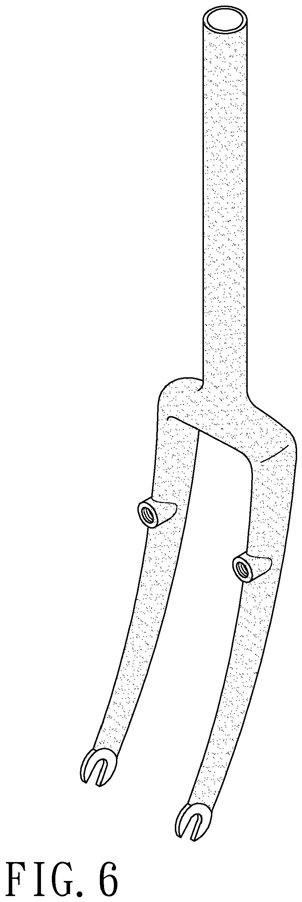

Accordingly, as shown in Fig. 6, the fork tubes of the bicycle front fork have integrally formed bumps on the front for locking a brake without bonding or welding, so the bicycle front fork can withstand a relatively large and frequent vibration and impact. In such a case, the present method prevent the disadvantages, i.e. complicated, time-consuming and costly manufacturing procedure, and poor appearance due to having a bonding or welding sign, of the traditional method.

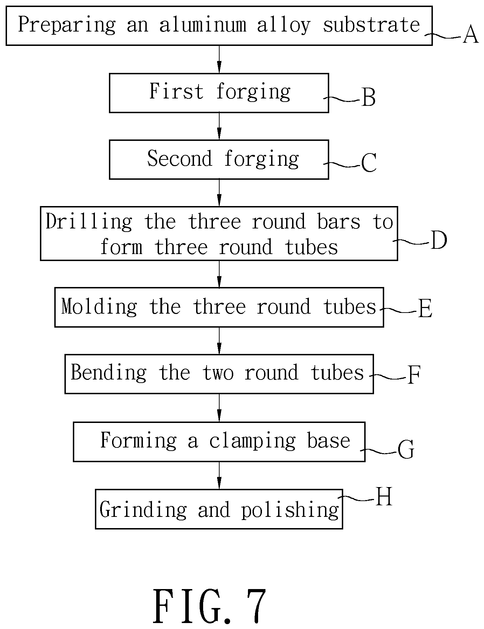

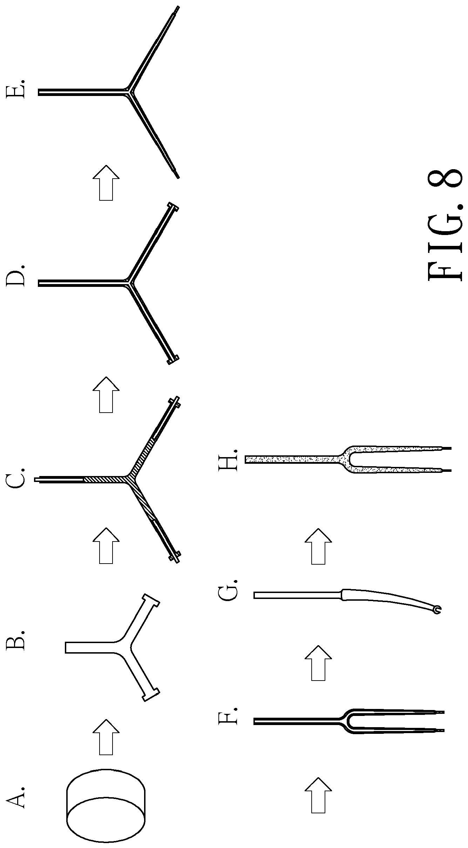

Referring to Fig. 7 and Fig. 8, a flow chart and a schematic drawing showing the third embodiment of the present invention are revealed. A simple method for manufacturing an integrally formed bicycle front fork having a wheel clamping base comprising the steps of:
A. preparing an aluminum alloy substrate consistent with a size and a volume of a finished product;
B. placing the aluminum alloy substrate into a first mold to be forged and formed into a blank having three round bars integrally connected in a radial, wherein two of the three round bars has a first side and a second side on the front end thereof, and the first side or both of the first side and the second side connect to assembling segments; preferably both of the first side and the second side of each of the two round bars are provided with a assembling segment;
C. placing the blank into a second mold for extruding and punching front ends of the three round bars of the blank to have guide holes;
D. drilling the three round bars along the guide holes to form three round tubes communicated with one another;
E. flattening and shrinking openings of two of the three round tubes, and molding the assembling segments to connectedly extend from the front ends of the two round tubes in parallel;
F. downwardly bending the two round tubes having the assembling segments to space apart from each other in parallel for two fork tubes of a bicycle front fork and allowing the other round tube to form a vertical tube of the bicycle front fork;
G. punching the assembling segments at the front ends of the two fork tubes into locking connection portions for a clamping base of the bicycle front fork; and
H. grinding and polishing a surface of the bicycle front fork to form a finished product having a polishing and flawless appearance.

Accordingly, the simple method can make an integrally formed bicycle front fork having a wheel clamping base at the front ends of the fork tubes for receiving a wheel axle.

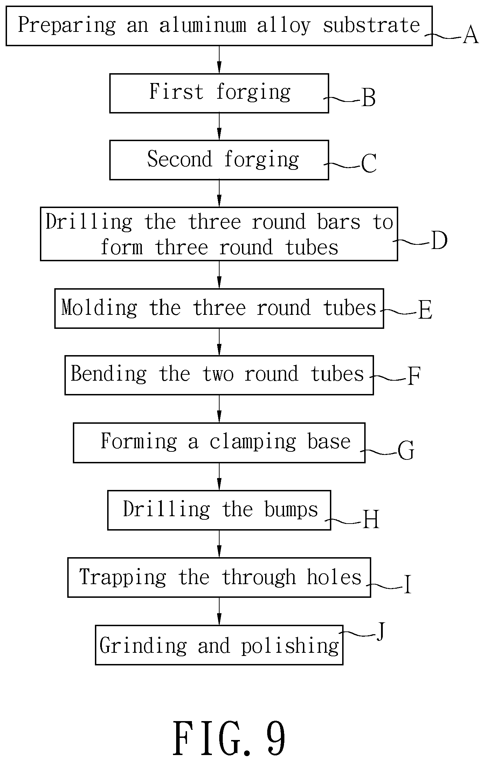

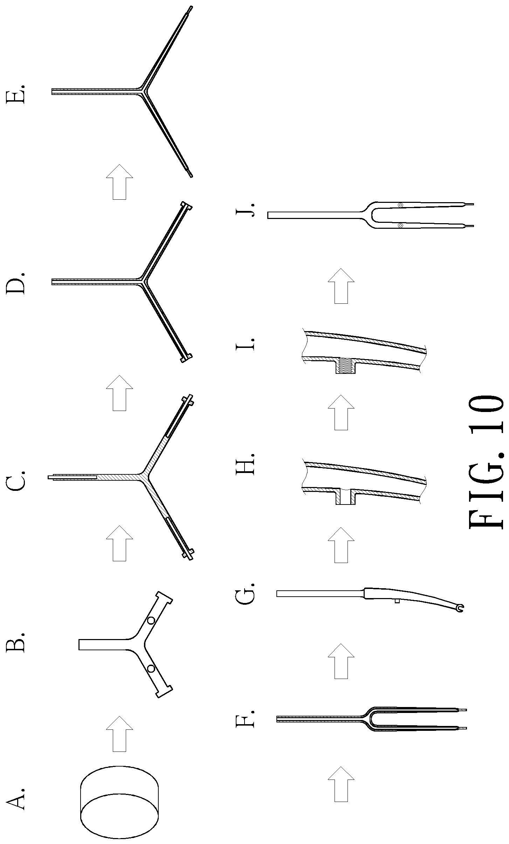

Referring to Fig. 9 and Fig. 10, a flow chart and a schematic drawing showing the fourth embodiment of the present invention are revealed. A method for manufacturing bicycle front fork having an integrally formed wheel clamping base and integrally formed bumps on the front of the fork tubes for locking a brake comprises the steps of:
A. preparing an aluminum alloy substrate consistent with a size and a volume of a finished product;
B. placing the aluminum alloy substrate into a first mold to be forged and formed into a blank having three round bars integrally connected in a radial orientation, wherein two of the three round bars has a first side and a second side on the front end thereof, and the first side or both of the first side and the second side connect to assembling segments; preferably both of the first side and the second side of each of the two round bars are provided with a assembling segment, and a lateral of the each of the two rectangular bars are provided with a bump;
C. placing the blank into a second mold for extruding and punching front ends of the three round bars of the blank to have guide holes;
D. drilling the three round bars along the guide holes to form three round tubes communicated with one another;
E. flattening and shrinking openings of two of the three round tubes, and molding the assembling segments to connectedly extend from the front ends of the two round tubes in parallel;
F. downwardly bending the two round tubes having the assembling segments to space apart from each other in parallel for two fork tubes of a bicycle front fork and allowing the other round tube to form a vertical tube of the bicycle front fork;
G. punching the assembling segments at the front ends of the two fork tubes into locking connection portions for a clamping base of the bicycle front fork;
H. drilling the bumps on the two fork tubes to have through holes;
I. tapping the through holes on the bumps of the two fork tubes to have a thread section on a wall of each of the through holes; and finally
J. grinding and polishing a surface of the bicycle front fork to form a finished product having a polishing and flawless appearance.

Accordingly, the bicycle front fork has integrally formed bumps on the front of the fork tubes of the bicycle front fork for locking a brake effectively.

It is worth mentioning that the steps of drilling the bumps as well as tapping the through holes can be conducted after the step of bending the two round tubes and before the step of forming a clamping base.

## Claims

1. A method for manufacturing a bicycle front fork having a wheel clamping base, comprising the steps of:
A. preparing an aluminum alloy substrate;
B. extruding the aluminum alloy substrate to have three rectangular bars integrally connected in a radial orientation, wherein two of the three rectangular bars has a first side and a second side on the front end thereof, and the first side or both of the first side and the second side connect to assembling segments;
C. cutting the substrate for a blank;
D. placing the blank into a first mold for forging the three rectangular bars into three round bars and stamping a raw edge and a scrap of the blank;
E. abrading the raw edge and the scrap of the blank;
F. placing the blank into a second mold for extruding and punching front ends of the three round bars of the blank to have guide holes;
G. drilling the three round bars along the guide holes to form three round tubes communicated with one another;
H. flattening and shrinking openings of two of the three round tubes, and molding the assembling segments to connectedly extend from the front ends of the two round tubes in parallel;
I. downwardly bending the two round tubes having the assembling segments to space apart from each other in parallel for two fork tubes of a bicycle front fork and allowing the other round tube to form a vertical tube of the bicycle front fork; and
J. punching the assembling segments at the front ends of the two fork tubes into locking connection portions for a clamping base of the bicycle front fork.

2. The method as claimed in claim 1, wherein each of the two rectangular bars having the assembling segments in the step B further has a bump on a lateral thereof, and a step for flattening and molding the bump on each of the two round bars of the blank to bend the same from the lateral to a front of each of the two round bars is conducted before the step F.

3. The method as claimed in claim 2, wherein the method further comprises a step that the bumps are drilled to have through holes after the two round bars having the bumps are formed into the two round tubes in the step G and the two round tubes are bended to form the two fork tubes in the step I.

4. The method as claimed in claim 3, wherein the method further comprises a step for tapping the through holes on the bumps of the two fork tubes to have a thread section on a wall of each of the through holes.

5. The method as claimed in claim 1, wherein the method further comprises a final step for grinding and polishing a surface of the bicycle front fork.

6. A method for manufacturing a bicycle front fork having a wheel clamping base, comprising the steps of:
A. preparing an aluminum alloy substrate;
B. placing the aluminum alloy substrate into a first mold to be forged and formed into a blank having three round bars integrally connected in a radial orientation, wherein two of the three round bars has a first side and a second side on the front end thereof, and the first side or both of the first side and the second side connect to assembling segments;
C. placing the blank into a second mold for extruding and punching front ends of the three round bars of the blank to have guide holes;
D. drilling the three round bars along the guide holes to form three round tubes communicated with one another;
E. flattening and shrinking openings of two of the three round tubes, and molding the assembling segments to connectedly extend from the front ends of the two round tubes in parallel;
F. downwardly bending the two round tubes having the assembling segments to space apart from each other in parallel for two fork tubes of a bicycle front fork and allowing the other round tube to form a vertical tube of the bicycle front fork; and
G. punching the assembling segments at the front ends of the two fork tubes into locking connection portions for a clamping base of the bicycle front fork.

7. The method as claimed in claim 6, wherein each of the two round bars having the assembling segments in the step B further has a bump at a front thereof.

8. The method as claimed in claim 7, wherein the method further comprises a step that the bumps are drilled to have through holes after the two round bars having the bumps are formed into the two round tubes in the step D and the two round tubes are bended to form the two fork tubes in the step F.

9. The method as claimed in claim 8, wherein the method further comprises a step for tapping the through holes on the bumps of the two fork tubes to have a thread section on a wall of each of the through holes.

10. The method as claimed in claim 6, wherein the method further comprises a final step for grinding and polishing a surface of the bicycle front fork.

## Patentansprüche

1. Verfahren zur Herstellung einer Fahrradvordergabel mit einer Radhalterung, wobei das Verfahren die folgenden Schritte aufweist:
A. Bereitstellen eines Aluminiumlegierungssubstrats;
B. Extrudieren des Aluminiumlegierungssubstrats zu einem Profil mit drei einstückig ausgebildeten, in einer radialen Ausrichtung sich erstreckenden, rechteckigen Schienen, wobei eine erste und/oder eine zweite Seite am Vorderende von zwei der drei rechteckigen Schienen einen Montageabschnitt aufweisen/aufweist;
C. Zuschneiden des Substrats für einen Rohling;
D. Platzieren des Rohlings in eine erste Form zum Schmieden der drei rechteckigen Schienen in drei Rundstangen und Wegstanzen von überschüssigen Graten und Schrott;
E. Abschleifen der Schnittkante und den Schrott des Rohlings;
F. Platzieren des Rohlings in eine zweite Form zum Extrudieren und Stanzen der Vorderenden der drei Rundstangen des Rohlings, um Führungslöcher zu bilden;
G. Bohren der drei Rundstangen entlang den Führungslöchern, um drei miteinander kommunizierende Rundrohre zu bilden;
H. Abflachen und Schrumpfen von Öffnungen von zwei der drei Rundrohre und Ausformen der Montageabschnitte, derart, dass sich diese ausgehend von den Vorderenden der beiden Rundrohre parallel zueinander erstrecken;
I. Biegen der beiden die Montageabschnitte aufweisenden Rundrohre nach unten, derart, dass diese parallel zueinander verlaufen und in einem gewissen Abstand getrennt sind, wodurch zwei Gabelrohre einer Fahrradvordergabel ausgebildet sind, wobei das andere Rundrohr zu einem Vertikalrohr der Fahrradvordergabel geformt ist; und
J. Stanzen der an den Vorderenden der beiden Gabelrohre ausgebildeten Montageabschnitte zu Halteabschnitten als Radhalterung der F ahrradvordergabel.

2. Verfahren nach Anspruch 1,
**dadurch gekennzeichnet,**
**dass** jede der beiden mit den Montageabschnitten versehenen rechteckigen Stangen in Schritt B ferner an einer gewissen Stelle einen Fortsatz aufweist, und dass ein Schritt zum Abflachen und Formen des an jeder der beiden Rundrohre des Rohlings ausgebildeten Fortsatzes durchgeführt wird, wobei der Fortsatz zur Vorderseite der beiden Rundstangen vor dem Schritt F gebogen wird.

3. Verfahren nach Anspruch 2, ferner mit einem Schritt zum Bohren der Fortsätze, derart, dass Durchgangslöcher ausgebildet sind, nachdem die beiden die Fortsätze aufweisenden Rundstangen in die beiden Rundrohre in Schritt G geformt sind und die beiden Rundrohre so gebogen werden, dass die beiden Gabelrohre in Schritt I ausgebildet sind.

4. Verfahren nach Anspruch 3, ferner mit einem Schritt zum Gewindeschneiden der Durchgangslöcher an den Fortsätzen der beiden Gabelrohre, sodass sich ein Gewindeabschnitt an der Begrenzungswand der jeweiligen Durchgangslöcher ergibt.

5. Verfahren nach Anspruch 1, ferner mit einem Schlussschritt zum Schleifen und Polieren einer Oberfläche der Fahrradvordergabel.

6. Verfahren zur Herstellung einer Fahrradvordergabel mit einer Radhalterung, wobei das Verfahren die folgenden Schritte aufweist:
A. Bereitstellen eines Aluminiumlegierungssubstrats;
B. Platzieren des Aluminiumlegierungssubstrats in eine erste Form zum Schmieden, sodass sich ein Rohling mit drei Rundstangen in einer radialen Ausrichtung einstückig ausgebildet ist, wobei eine erste und/oder eine zweite Seite am Vorderende von zwei der drei Rundstangen einen Montageabschnitt aufweisen/aufweist;
C. Platzieren des Rohlings in eine zweite Form zum Extrudieren und Stanzen der Vorderenden der drei Rundstangen des Rohlings, um Führungslöcher zu bilden;
D. Bohren der drei Rundstangen entlang den Führungslöchern, um drei miteinander kommunizierende Rundrohre zu bilden;
E. Abflachen und Schrumpfen von Öffnungen von zwei der drei Rundrohre und Ausformen der Montageabschnitte, derart, dass sich diese ausgehend von den Vorderenden der beiden Rundrohre parallel zueinander erstrecken;
F. Biegen der beiden die Montageabschnitte aufweisenden Rundrohre nach unten, derart, dass diese parallel zueinander verlaufen und in einem gewissen Abstand getrennt sind, wodurch zwei Gabelrohre einer Fahrradvordergabel ausgebildet sind, wobei das andere Rundrohr zu einem Vertikalrohr der Fahrradvordergabel geformt ist; und
G. Stanzen der an den Vorderenden der beiden Gabelrohre ausgebildeten Montageabschnitte zu Halteabschnitten als Radhalterung der Fahrradvordergabel.

7. Verfahren nach Anspruch 6,
**dadurch gekennzeichnet,**
**dass** jede der beiden mit den Montageabschnitten versehenen rechteckigen Stangen in Schritt B ferner an einer gewissen Stelle einen Fortsatz aufweist.

8. Verfahren nach Anspruch 7, ferner mit einem Schritt zum Bohren der Fortsätze, derart, dass Durchgangslöcher ausgebildet sind, nachdem die beiden die Fortsätze aufweisenden Rundstangen in die beiden Rundrohre in Schritt D geformt sind und die beiden Rundrohre so gebogen werden, dass die beiden Gabelrohre in Schritt F ausgebildet sind.

9. Verfahren nach Anspruch 8, ferner mit einem Schritt zum Gewindeschneiden der Durchgangslöcher an den Fortsätzen der beiden Gabelrohre, sodass sich ein Gewindeabschnitt an der Begrenzungswand der jeweiligen Durchgangslöcher ergibt.

10. Verfahren nach Anspruch 6, ferner mit einem Schlussschritt zum Schleifen und Polieren einer Oberfläche der Fahrradvordergabel.

## Revendications

1. Un procédé de fabrication d'une fourche avant de bicyclette ayant une embase de serrage de roue, comprenant les étapes consistant à :
A. préparer un substrat en alliage d'aluminium ;
B. extruder le substrat en alliage d'aluminium pour obtenir trois barres rectangulaires formant corps les unes avec les autres, dans une orientation radiale, deux des trois barres rectangulaires ayant un premier côté et un deuxième côté sur leur extrémité avant, et le premier côté, ou à la fois le premier côté et le deuxième côté, sont reliés à des segments d'assemblage ;
C. couper le substrat pour former une ébauche ;
D. placer l'ébauche dans un premier moule de façon à forger les trois barres rectangulaires en trois barres rondes et de façon à poinçonner un bord brut et une branche de l'ébauche ;
E. procéder à une abrasion du bord brut et de la branche de l'ébauche ;
F. placer l'ébauche dans un deuxième moule pour extruder et poinçonner les extrémités antérieures des trois barres rondes de l'ébauche pour former des trous de guidage ;
G. percer les trois barres rondes le long des trous de guidage pour former trois tubes ronds communiquant entre eux ;
H. aplatir et rétrécir des ouvertures de deux des trois tubes ronds et mouler des segments d'assemblage de façon qu'ils s'étendent de manière liée depuis les extrémités avant des deux tubes ronds en étant parallèles ;
I. plier vers le bas les deux tubes ronds ayant les segments d'assemblage de façon à les espacer l'un de l'autre parallèlement pour former deux tubes de fourche d'une fourche avant de bicyclette et permettre à l'autre tube rond de former un tube vertical de la fourche avant de bicyclette ; et
J. poinçonner les segments d'assemblage aux extrémités avant des deux tubes de fourche pour former des parties de connexion de verrouillage pour une embase de serrage de la fourche avant de bicyclette.

2. Le procédé selon la revendication 1, dans lequel chacune des deux barres rectangulaires ayant les segments d'assemblage, obtenue à l'étape B, présente en outre une bosse sur un côté d'elle-même, et dans lequel il est mis en oeuvre avant l'étape F une étape d'aplanissement et de moulage de la bosse sur chacune des deux barres rondes de l'ébauche de façon à les plier depuis ledit côté vers l'avant de chacune des deux barres rondes.

3. Le procédé selon la revendication 2, dans lequel le procédé comprend en outre une étape selon laquelle les bosses sont forées de façon à présenter des trous traversants après que les deux barres rondes ayant les bosses aient été formées en les deux tubes ronds à l'étape G, et les deux tubes ronds sont pliés pour former les deux tubes de fourche à l'étape I.

4. Le procédé selon la revendication 3, dans lequel le procédé comprend en outre une étape pour tarauder les trous traversants sur les bosses des deux tubes de fourche de façon à former une portion filetée sur une paroi de chacun des trous traversants.

5. Le procédé selon la revendication 1, dans lequel le procédé comprend en outre une étape finale de meulage et de polissage d'une surface de la fourche avant de la bicyclette.

6. Un procédé de fabrication d'une fourche avant de bicyclette ayant une embase de serrage de roue, comprenant les étapes consistant à :
A. préparer un substrat en alliage d'aluminium ;
B. placer le substrat en alliage d'aluminium dans un premier moule de façon qu'il soit forgé et formé en une ébauche ayant trois barres rondes formant corps les unes avec les autres, dans une orientation radiale, dans lequel deux des trois barres rondes ont un premier côté et un deuxième côté sur l'extrémité avant d'elles-mêmes, et le premier côté, ou à la fois le premier côté et le deuxième côté, sont reliés aux segments d'assemblage ;
C. placer l'ébauche dans un deuxième moule pour extruder et poinçonner des extrémités avant des trois barres rondes de l'ébauche pour former des trous de guidage ;
D. percer les trois barres rondes le long des trous de guidage pour former trois tubes ronds communiquant les uns avec les autres ;
E. aplatir et rétrécir des ouvertures de deux des trois tubes ronds, et mouler les segments d'assemblage de façon qu'ils s'étendent de manière liée depuis les extrémités avant des deux tubes ronds en étant parallèles ;
F. plier vers le bas les deux tubes ronds ayant les segments d'assemblage de façon à les espacer l'un de l'autre parallèlement pour former deux tubes de fourche d'une fourche avant de bicyclette et permettre à l'autre tube rond de former un tube vertical de la fourche avant de bicyclette ; et
G. poinçonner les segments d'assemblage aux extrémités avant des deux tubes de fourche pour former des parties de connexion de verrouillage pour une embase de serrage de la fourche avant de bicyclette.

7. Le procédé selon la revendication 6, dans lequel chacune des deux barres rondes ayant les segments d'assemblage, obtenue à l'étape B, a en outre une bosse sur son avant.

8. Le procédé selon la revendication 7, dans lequel le procédé comprend en outre une étape selon laquelle les bosses sont forées de façon à présenter des trous traversants, après que les deux barres rondes ayant les bosses aient été formées en les deux tubes ronds à l'étape D, et les deux tubes ronds sont pliés pour former les deux tubes de fourche à l'étape F.

9. Le procédé selon la revendication 8, dans lequel le procédé comprend en outre une étape de taraudage des trous traversants sur les bosses des deux tubes de fourche de façon à former une portion filetée sur une paroi de chacun des trous traversants.

10. Le procédé selon la revendication 6, dans lequel le procédé comprend en outre une étape finale de meulage et de polissage d'une surface de la fourche avant de la bicyclette.
